# EUROPEAN PATENT APPLICATION

(11) **EP 3 441 378 A1**
(43) Date of publication of application: **13.02.2019**
(21) Application number: 17185663.6
(22) Date of filing: 10.08.2017
(51) Int. Cl.: C04B 35/04, C04B 2/10, C04B 2/12, C04B 35/622, C04B 35/64, C04B 38/00, C22B 1/00

(54) **METHOD FOR TREATING MAGNESITE, A SINTERED MAGNESIA PRODUCED BY THE METHOD, AND A SINTERED REFRACTORY CERAMIC PRODUCT PRODUCED BY THE METHOD**

(71) Applicant: Refractory Intellectual Property GmbH & Co. KG, 1100 Wien (AT)
(72) Inventor: JinFeng, Jia, Dalian, Liaoning (CN); Jing, Guo, Dalian, Liaoning (CN); YongYi, Liu, Dalian, Liaoning (CN); Ochabauer, Ferdinand, 8614 Breitenau am Hochlantsch (AT); Mühlhäusser, Jürgen, 8700 Leoben (AT); Nievoll, Josef, 1060 Wien (AT)
(74) Representative: Berkenbrink, Kai-Oliver

(57) **Abstract**

The invention relates to a method for treating magnesite, a sintered magnesia produced by the method, and a sintered, refractory ceramic product produced by the method.

## Description

The invention relates to a method for treating magnesite, a sintered magnesia produced by the method and a sintered refractory ceramic product produced by the method.

Sintered magnesia is an important refractory raw material for producing refractory ceramic products. To produce refractory ceramic products by using sintered magnesia, a batch comprising sintered magnesia is provided and fired subsequently, whereby the raw materials of the batch sinter with one another and form a sintered refractory ceramic product.

The term "refractory product" in terms of the invention identifies in particular refractory products with an operating temperature of above 600°C and preferably refractory materials according to DIN 51060:2000-06, thus materials comprising a pyrometric cone equivalent > SK 17. The pyrometric cone equivalent can in particular be determined according to DIN EN 993-12:1997-06.

As is well known, a "batch" identifies a composition of one or a plurality of components or raw materials, respectively, by means of which a refractory ceramic product can be produced by means of a temperature treatment, thus by means of a ceramic firing for producing a sintered refractory ceramic product.

Sintered magnesia is obtained by treating magnesite by means of temperature loading. Magnesite is a naturally occurring mineral, which consists predominantly of magnesium carbonate, thus MgCO₃. The treatment of magnesite to produce sintered magnesia typically takes place in a two-step process. In a first step, the magnesite is thereby heated to a temperature in the range of between approximately 800 and 1,200°C. The magnesite is calcined in this so-called calcine firing, whereby the magnesium carbonate of the magnesite disintegrates into MgO and CO₂.

The product obtained thereafter is identified as caustic magnesia (occasionally also referred to as caustic calcined magnesia or calcined magnesia). After cooling down, the caustic magnesia is routinely further processed, in particular also finely ground, and is agglomerated into granules or pressed to form molded bodies.

In a second step, the caustic magnesia is subsequently subjected to a sinter firing, in which the caustic magnesia sinters into sintered magnesia. This sinter firing routinely takes place at temperatures in the range of between 1,700 and 2,000°C.

The sintered magnesia of high density, in particular with a bulk density in the range of between approximately 3.20 and 3.40 g/cm³, which is routinely desired in refractory technology, is obtained by means of this two-step method.

A one-step sinter firing of magnesite is also carried out in special cases. Such a one-step sinter firing is in particular used in the case of a fine crystalline and iron-rich magnesite, because the desired sintered magnesia with a high bulk density can otherwise not be produced by means of such a one-step method.

It is also known in the prior art not to produce sintered magnesia of a high density, but a porous sintered magnesia. Such a porous sintered magnesia can be desired, for example, to reduce the thermal conductivity of a refractory product produced by using this porous sintered magnesia.

Burn-off methods are used to produce such porous sintered magnesia. The caustic magnesia is thereby mixed with organic material, which can be burned off, and the mixture is subjected to a sinter firing. The organic material, which can be burned off, burns off during the sintering and leaves behind pores in the sintered magnesia. Such a method is described for example in US 4,627,878.

According to the prior art, a high use of energy and technology input is required in order to produce such porous sintered magnesia. A high input of technology and energy is in each case required in this respect in order to initially calcine the magnesite in a first calcination step, to subsequently grind it and mix it with an organic substance, and to finally sinter the caustic magnesia, which is mixed with the organic substance, into a sintered magnesia in a second calcination step.

The invention at hand is based on the object of providing a method for treating magnesite, by means of which a sintered magnesia of low density can be produced more easily. The invention is in particular based on the object of providing such a method for treating magnesite, by means of which a sintered magnesia of low density and high porosity can be produced easily, in particular with an input of energy and technology, which is reduced as compared to the prior art.

A further object of the invention is to provide a sintered magnesia of low density. The invention is in particular also based on the object of providing a sintered magnesia of low density and high porosity.

A further object of the invention is to provide a sintered refractory ceramic product on the basis of magnesia, which has a low thermal conductivity. The invention is in particular also based on the object of providing such a sintered refractory ceramic product, which simultaneously also has a high degree of strength with a low thermal conductivity.

To solve the object, provision is made according to the invention for a method for treating magnesite, which comprises the following steps:
providing magnesite, which has the following features:
the magnesite has a chemical composition comprising the following substances in the following percentages by weight (in each case based on the total weight of the magnesite):

| | |
|---|---|
| MgO: | at least 46.5 % by weight; |
| Fe₂O₃: | at most 0.5% by weight |
| Loss of ignition: | at least 50.0 % by weight; |

the magnesite is present as sparry magnesite;
continuous heating of the magnesite to a temperature, at which the magnesite sinters into sintered magnesia.

Surprisingly, it turned out according to the invention that a sintered magnesia can be produced in a one-step firing process from a magnesite, insofar as the magnesite is present as sparry magnesite and has a specific chemical composition. Surprisingly, it in particular turned out according to the invention that a sintered magnesia, which has only a small density, but which is eminently suited as raw material for producing refractory ceramic products in spite of this low density, can be produced from such a magnesite in a one-step firing process. In this respect, the invention is in particular also based on the surprising knowledge that a sintered magnesia can be produced by means of the method according to the invention, which, in spite of its low density and its associated high porosity, nonetheless has such a high strength that this sintered magnesia is eminently suited as raw material for producing refractory ceramic products comprising a low thermal conductivity and a simultaneously high strength.

To carry out the method according to the invention, provision is made for magnesite, thus raw magnesite. The magnesite provided for the method according to the invention is thus natural magnesite, which consists predominantly of magnesium carbonate (MgCO₃).

The information provided herein in % by weight relating to the magnesite provided for the method according to the invention is in each case based on the total weight of the magnesite.

The magnesite provided for carrying out the method according to the invention is present as sparry magnesite, thus as macrocrystalline magnesite. In this respect, the sparry magnesite provided for the method according to the invention has large, in particular granular magnesite crystals, which can routinely also be seen with the naked eye. The sparry magnesite provided for the method according to the invention preferably comprises magnesite crystals comprising a crystal size of at least 1,000 µm, in particular magnesite crystals comprising an average diameter of at least 1,000 µm. According to an even more preferred embodiment, at least 50% by weight, more preferably at least 90% by weight of the sparry magnesite provided for the method according to the invention consists of magnesite crystals having an average diameter of at least 1,000 µm. The average diameter of the magnesite crystals is determined according to the standard ASTM E112:2013 (Reapproved 2004).

According to the invention, it turned out that a sintered magnesia comprising the above-identified, advantageous properties can only be produced by means of the method according to the invention from such a sparry magnesite, when the sparry magnesite simultaneously has a specific chemical composition. In this respect, the magnesite has a chemical composition, according to which MgO is present in the magnesite in a percentage of at least 46.5% by weight and Fe₂O₃ is present in a percentage of at most 0.5% by weight. Furthermore, the loss of ignition of the magnesite is at least 50.0% by weight.

The chemical composition and the loss of ignition, as referred to herein, is determined on annealed substance (annealed at 1,025°C), according to the standard DIN EN ISO 12677:2003.

The magnesite provided for the method according to the invention is thus a magnesite of very high quality comprising a high percentage of MgO and an extremely small percentage of Fe₂O₃.

Surprisingly, it turned out according to the invention that the advantageous properties of the sintered magnesia produced according to the method according to the invention, thus in particular the low density and high porosity thereof with a simultaneously high strength, are increased, if the percentage of Fe₂O₃ in the magnesite increasingly approaches a specific percentage by weight in the range of 0.1 to 0.3% by weight. In this respect, provision can be made particularly preferably according to the invention for the magnesite to have a chemical composition comprising a percentage by weight of Fe₂O₃ of at most 0.4% by weight and even more preferably of at most 0.3% by weight. Provision can further particularly preferably be made for the magnesite to have a chemical composition comprising a percentage by weight of Fe₂O₃ of at least 0.1% by weight. In this respect, provision can preferably be made according to the invention for the magnesite to have a chemical composition comprising a percentage by weight of Fe₂O₃ in the range of 0.1 to 0.5% by weight, more preferably in the range of 0.1 to 0.4% by weight, and even more preferably in the range of 0.1 to 0.3% by weight.

With regard to the amount of MgO, the magnesite provided for the method preferably has a percentage of MgO in the range of 46.5 to 47.6% by weight and more preferably a percentage in the range of 46.5 to 47.4% by weight.

The loss of ignition of the chemical composition of the magnesite is predominantly carbon dioxide (CO₂), in particular also exclusively carbon dioxide. The latter originates from the magnesium carbonate (MgCO₃) of the magnesite.

The percentage of loss of ignition of the magnesite is preferably in the range of 50.0 to 53.0% by weight, more preferably in the range from 50.0 to 52.4% by weight and even more preferable in the range from 50.0 to 52.0% by weight. In this respect, the chemical percentage of CO₂ can be present in the magnesite in the in the above ranges in which the loss of ignition can be present in the magnesite, if the loss of ignition is present in the form of CO₂.

According to a preferred embodiment, the magnesite has a chemical composition comprising a total weight of MgO and loss of ignition in a percentage in the range of 96.5 to 99.9% by weight, more preferably a percentage in the range of 97.0 to 99.9% by weight.

According to a preferred embodiment, at least 96.6% by weight of the magnesite consists of MgCO₃, more preferably at least 97% by weight.

Preferably, the magnesite consists of a percentage of MgCO₃ in the range of 96.5 to 99.9% by weight, and more preferably of a percentage in the range of 97 to 99.9% by weight.

According to the invention, it surprisingly turned out that a sintered magnesia comprising the above-identified properties can be produced in an advantageous manner by means of the method according to the invention, when the magnesite provided for the method has a chemical composition comprising an extremely small percentage of MnO. In this respect, provision is made according to a preferred embodiment for the magnesite to have a chemical composition comprising a percentage of weight of MnO of below 0.05% by weight, more preferably of below 0.025% by weight and even more preferably of below 0.015% by weight of MnO.

It further turned out according to the invention that a sintered magnesia comprising the above-identified properties can be produced in an advantageous manner by means of the method according to the invention, when the magnesite provided for the method has a chemical composition comprising specific percentage of CaO, SiO₂ and Al₂O₃. In this respect, provision is made according to a preferred embodiment for the magnesite to have a chemical composition comprising a percentage by weight of the oxides CaO, SiO₂ and Al₂O₃ in the following percentages by weight, whereby preferably at least one of these oxides, more preferably two and particularly preferably all three of these oxides are present in the magnesite in the percentages of weight below.

The magnesite provided for the method preferably has a chemical composition comprising a percentage of CaO of below 1.0% by weight, preferably a percentage in the range of between 0.2 and 1.0% by weight, and more preferably a percentage in the range of 0.52 to 0.9% by weight.

The magnesite provided for the method preferably has a chemical composition comprising a percentage of Al₂O₃ of below 0.2% by weight, preferably a percentage in the range of 0.01 to 0.1% by weight, and more preferably a percentage in the range of 0.02 to 0.08% by weight.

The magnesite provided for the method preferably has a chemical composition comprising a percentage of SiO₂ of below 1.5% by weight, preferably a percentage in the range of between 0.2 and 1.5% by weight, and more preferably a percentage in the range of 0.3 to 1.3% by weight.

According to a preferred embodiment, provision is made for the magnesite provided for the method to have a chemical composition comprising a total weight of the oxides MgO, Fe₂O₃, MnO, CaO, Al₂O₃ and SiO₂ as well as the loss of ignition (in particular in the form of CO₂) of at least 99.7% by weight, more preferably of at least 99.8% by weight and for example also of 100% by weight. In this respect, the percentage of magnesite provided for the method can have a chemical composition comprising a total weight of the oxides MgO, Fe₂O₃, MnO, CaO, Al₂O₃ and SiO₂ as well as the loss of ignition (in particular in the form of CO₂) in a percentage in the range of 99.7 to 100% by weight and more preferably a percentage in the range of 99.8 to 100% by weight.

In this respect, provision can be made for the magnesite to have a chemical composition, which, in addition to the oxides MgO, Fe₂O₃, MnO, CaO, Al₂O₃ and SiO₂ as well as the loss of ignition (in particular in the form of CO₂), has further substances in a percentage of below 0.3% by weight and more preferably in a percentage of below 0.2% by weight.

According to the invention, it turned out that the magnesite for carrying out the method according to the invention is particularly advantageously provided as granular good, in particular in a coarse grain size. According to a preferred embodiment, the magnesite is provided in such a way that at least 90% by weight of it is provided in a grain size of at least 30 mm and more preferably of at least 50 mm. According to a preferred embodiment, provision is made for the magnesite to be provided in such a way that at least 90% by weight is present in a grain size in the range of between 30 mm and 150 mm, and more preferably in a grain size in the range of between 50 mm and 150 mm. The grain size can be determined by means of sieving.

A core idea of the invention lies in the method step, according to which the magnesite provided for the method according to the invention is continuously heated to a temperature, at which the magnesite sinters into sintered magnesia. In contrast to the two-step firing process in the prior art, in which magnesite is subjected to a calcine firing in a first calcination step and, after a cool-down and treatment, is subjected to a sinter firing in a second step, the magnesite is heated to its sintering temperature in one step according to the invention. According to the invention, the (natural) magnesite is thus heated to its sintering temperature in a one-step firing process. Insofar as provision is made according to the invention for the magnesite to be heated continuously, this expresses that the magnesite is heated to its sintering temperature in a one-step, thus continuous step, of the heating. Insofar as the magnesite is heated "continuously" in this respect according to the invention, this is not to be understood in such a way that the magnesite is heated to its sintering temperature uniformly or with a constant temperature loading, respectively. According to the invention, the magnesite is in fact heated continuously in the sense that it is heated continuously and without intermediate cool-down from its provided state as natural magnesite, thus in the form of raw magnesite, beyond its calcination temperature to a temperature, at which the magnesite sinters. The magnesite is preferably heated permanently, thus continuously, to a temperature, at which the magnesite sinters into sintered magnesia.

Preferably, the magnesite is heated to a temperature above 1,700°C, particularly preferable in the range of between 1,720°C and 2,000°C. According to the invention, it turned out that a magnesite provided for the method according to the invention sinters into a sintered magnesia of a low density and high porosity, while simultaneously having a high strength, in this temperature range in a particularly advantageous manner.

According to a preferred embodiment, provision is made for the magnesite to be heated to the sintering temperature at a heating rate in the range of 30 to 600°C/h.

On principle, the heating of the magnesite can be carried out in any furnace known from the prior art for firing sintered magnesia. In the case of the method according to the invention, the magnesite is preferably heated in a tunnel kiln, rotary kiln or in a shaft furnace.

A sintered magnesia, which is characterized by characteristic chemical and physical features, can be produced by means of the method according to the invention.

A sintered magnesia, which can in particular be produced by means of the method according to the invention and which comprises the following features, is also the subject matter of the invention:
The sintered magnesia has a chemical composition comprising the following substances with the following percentages by weight:

| | |
|---|---|
| MgO: | at least 95.0% by weight; |
| Fe₂O₃: | at most 1.0% by weight; |

and a density of at most 2.95 g/cm³.

The information in % by weight provided herein relating to the sintered magnesia according to the invention is in each case based on the total weight of the sintered magnesia.

In particular due to the low density of at most 2.95 g/cm³, the sintered magnesia according to the invention has a high porosity and thus only a small thermal conductivity. In this respect, the sintered magnesia according to the invention is eminently suited as raw material for producing a sintered refractory ceramic product comprising only a low thermal conductivity.

Particularly preferably, the density of the sintered magnesia according to the invention is at most 2.90 g/cm³ and more preferably at most 2.85 g/cm³. Preferably, the density of the sintered magnesia according to the invention lies in the range of 2.65 to 2.95 g/cm³, more preferably in the range of 2.70 to 2.90 g/cm³ and even more preferably in the range of 2.70 to 2.85 g/cm³.

The invention provided herein relating to the density of the sintered magnesia is the bulk density, determined according to standard DIN EN 993-1:1995-04.

The sintered magnesia preferably has a chemical composition comprising MgO in a percentage of at least 95% by weight, more preferably of at least 95,3 % by weight. According to a preferred embodiment, the sintered magnesia has a chemical composition comprising MgO in a percentage in the range of 95 to 99% by weight, more preferably in a percentage in the range of 95 to 98% by weight, and even more preferably in a percentage in the range of 95,3 to 97.5% by weight.

The sintered magnesia has a chemical composition comprising Fe₂O₃ in a percentage of at most 1.0% by weight, more preferably in a percentage of at most 0.9% by weight, and even more preferably in a percentage of at most 0.8% by weight. According to a preferred embodiment, the sintered magnesia has a chemical composition comprising Fe₂O₃ in a percentage in the range of 0.2 to 1.0% by weight, more preferably a percentage in the range of 0.2 to 0.9% by weight and even more preferably in a percentage in the range of 0.2 to 0.8% by weight.

The sintered magnesia preferably has a chemical composition comprising MnO in a percentage of below 0.04% by weight and more preferably in a percentage of below 0.03% by weight.

The sintered magnesia preferably has a chemical composition comprising CaO in a percentage of at most 2.0% by weight, particularly preferably in a percentage in the range of 1.0 to 2.0% by weight.

The sintered magnesia preferably has a chemical composition comprising Al₂O₃ in a percentage of at most 0.2% by weight, particularly preferably in a percentage in the range of 0.04 to 0.2% by weight.

The sintered magnesia preferably has a chemical composition comprising SiO₂ in a percentage of at most 3% by weight, particularly preferably in a percentage in the range of 0.5 to 2.5% by weight.

According to a preferred embodiment, the sintered magnesia has a chemical composition comprising a total weight of MgO, Fe₂O₃, MnO, CaO, Al₂O₃ and SiO₂ of at least 99.0% by weight, more preferably of at least 99.5% by weight.

In this respect, the sintered magnesia according to a preferred embodiment has a chemical composition, in which, in addition to MgO, Fe₂O₃, MnO, CaO, Al₂O₃ and SiO₂, further substances are present in an amount of at most 1.0% by weight, more preferably in a percentage of at most 0.5% by weight.

A sintered magnesia, which has the features disclosed herein and which is produced according to the method disclosed herein, is also the subject matter of the invention.

As already specified, the method according to the invention is eminently suited for producing a sintered magnesia, which can be provided as raw material for producing a sintered refractory ceramic product.

According to an embodiment, the method according to the invention thereby has the following further method steps:
cooling down the sintered magnesia sintered by means of the method according to the invention;
providing the sintered magnesia as raw material for producing a sintered refractory ceramic product.

According to a continuation of the method, the method according to the invention can comprise the following further method steps:
producing a batch by mixing the sintered magnesia with at least one further raw material;
producing a sintered refractory ceramic product by sintering the batch.

According to this continuation of the method according to the invention, the sintered magnesia according to the invention can be mixed with one or a plurality of further raw materials and a batch can be produced through this. Preferably, these further raw materials are magnesia-based raw materials. According to a preferred embodiment, the sintered magnesia according to the invention is mixed with at least one of the following further raw materials to produce a batch: sintered magnesia or fused magnesia. Particularly preferably, the sintered magnesia according to the invention is mixed with a further raw material in the form of sintered magnesia.

The production of a sintered refractory ceramic product by sintering the batch can be realized by means of the technologies, which are known from the prior art. In this respect, the batch can be prepared with a binding agent, in particular for example an organic binding agent, for example lignosulphonate. The batch, which is prepared with a binding agent, where applicable, can be formed into a molded body, for example by pressing. For example, the molded body can subsequently be dried, for example in a dryer.

Finally, the batch can be sintered into a refractory ceramic product, for example after a shaping and drying as specified above. For this purpose, the batch can be subjected to a sinter firing, can thus be heated or loaded with a temperature, respectively, in such a way that the components of the batch are sintered with one another and thus form a sintered refractory ceramic product. The sinter firing can be carried out at the temperatures required for the sintering, for example at temperatures in the range of between 1,400 and 1,850°C.

A sintered refractory ceramic product produced by using the sintered magnesia according to the invention is characterized by excellent insulating properties, while simultaneously having a good strength. The excellent insulating abilities are reflected in a low thermal conductivity and in a high open porosity of the product. The excellent strength properties of the product are reflected in good values of the cold crushing strength.

A sintered refractory ceramic product, which is produced by means of a method according to the invention and which comprises the following features, is also the subject matter of the invention:
the product consists of at least 80% by weight of MgO;
the product has a bulk density of below 2.85 g/cm³;
the thermal conductivity of the product at 1,200°C is below 4.0 W/mK;
the cold crushing strength of the product is at least 60 MPa.

The product is a magnesia-based product and consists of at least 80% by weight of MgO, based on the total weight of the product.

The bulk density of the product is below 2.85 g/cm³. According to a preferred embodiment, the bulk density of the product is in the range of 2.65 to 2.85 g/cm³, more preferably in the range of 2.65 to 2.8 g/cm³.

According to one embodiment, the thermal conductivity of the product at 1,000°C is below 4.5 W/mK. According to one embodiment, the thermal conductivity of the product at 800°C is below 5.5 W/mK. The thermal conductivity is determined according to DIN EN 821-2:1997.

According to one embodiment, the cold crushing strength of the product is in the range of 60 to 90 MPa. The cold crushing strength is determined according to standard DIN EN 993-5:1998-12.

Further features of the invention follow from the claims and the exemplary embodiments below.

All features of the invention can be combined with one another in any way, either alone or in combination.

Exemplary embodiments of the invention will be described below.

### Exemplary Embodiment 1

Initially, a raw magnesite in the form of sparry magnesite was provided, which had the following chemical composition:

| | |
|---|---|
| MgO: | 47.27% by weight |
| Fe₂O₃: | 0.25% by weight |
| MnO: | 0.01% by weight |
| CaO: | 0.65% by weight |
| Al₂O₃: | 0.04% by weight |
| SiO₂: | 0.33% by weight |
| Loss of ignition: | 51.30% by weight |
| Other: | 0.15% by weight. |

The loss of ignition was virtually exclusively present in the form of CO₂.

By far more than 90% by weight of the magnesite, nearly 100% by weight consisted of magnesite crystals having an average size of above 1,000 µm, determined according to ASTM E112:2013 (Reapproved 2004).

The magnesite was present in a grain size in the range of between 50 and 150 mm.

To carry out the method according to the invention, the magnesite was placed into a gas-fired tunnel kiln and was heated to a temperature of 1,750°C at a heating rate of 48°C/h. The total firing time at 1,750°C was six hours.

During this firing, the magnesite was calcined and sintered into sintered magnesia.

The sintered magnesia was subsequently discharged from the tunnel kiln and was cooled down.

The sintered magnesia obtained thereafter had a chemical composition comprising the following oxides in the following percentages by weight:

| | |
|---|---|
| MgO: | 97.16% by weight |
| Fe₂O₃: | 0.63% by weight |
| MnO: | 0.02 % by weight |
| CaO: | 1.27% by weight |
| Al₂O₃: | 0.08% by weight |
| SiO₂: | 0.75% by weight |
| Further: | 0.09% by weight. |

The bulk density of the sintered magnesia was 2.828 g/cm³.

Accordingly, the bulk density of the sintered magnesia was 79.5% of the true density of magnesia, and thus the sintered magnesia was highly porous.

The sintered magnesia was subsequently comminuted and was fractioned into the three grain fractions of between 3 and 5 mm, between 1 and < 3 mm and between >0 and < 1 mm by means of sieving and was mixed into a batch at the ratio of 12% by weight : 40% by weight : 24% by weight, together with 24% by weight of conventional sintered magnesia of the grain fraction of between > 0 and 0.1 mm. An organic binding agent in the form of lignosulphonate in a percentage of 3.7% by weight, based on the total weight of the batch without the binding agent, was added to the batch. The batch was subsequently pressed into cylindrical molded bodies, each comprising a height and a diameter of 50 mm, at a pressure of 150 MPa. The molded bodies were subsequently sintered for six hours in a gas-fired tunnel furnace at 1,750°C into sintered refractory ceramic products.

The physical values determined for this product, which is identified with V1 in Table 1 below, are specified in the following Table 1.

For comparative purposes, a sintered refractory ceramic product according to the prior art was produced, which is identified with V2 in Table 1 below. The product V2 was produced according to the product V1 according to the invention, but with the only difference that the used sintered magnesia was present in the same percentage of grain fractions, but was a sintered magnesia produced according to the prior art.

As follows from Table 1 below, the sintered refractory ceramic product V1 produced according to the method according to the invention, had a significantly smaller bulk density and higher open porosity than product V2 according to the prior art. The product V1 according to the invention simultaneously also had a very good strength value.

The product V1 according to the invention furthermore had a consistently lower thermal conductivity than the product V2 according to the prior art across the entire measured temperature range of between 25°C and 1,200°C.

**Table 1**

| **Physical value** | **V1** | **V2** |
|---|---|---|
| bulk density [g/cm³] | 2.72 | 2.92 |
| open porosity [% by volume] | 23.5 | 15.4 |
| cold crushing strength [MPa] | 74.3 | 81.3 |
| thermal conductivity at 25°C [W/mK] | 18.8 | 23.1 |
| thermal conductivity at 200°C [W/mK] | 12.3 | 14.8 |
| thermal conductivity at 400°C [W/mK] | 8.6 | 10.4 |
| thermal conductivity at 600°C [W/mK] | 6.6 | 8.1 |
| thermal conductivity at 800°C [W/mK] | 5.2 | 6.4 |
| thermal conductivity at 1,000°C [W/mK] | 4.2 | 5.2 |
| thermal conductivity at 1,200°C [W/mK] | 3.7 | 4.5 |

### Exemplary Embodiment 2

A raw magnesite was initially provided in the form of sparry magnesite, which had the following composition:

| | |
|---|---|
| MgO: | 46.83 % by weight |
| Fe₂O₃: | 0.22 % by weight |
| MnO: | 0.01 % by weight |
| CaO: | 0.79 % by weight |
| Al₂O₃: | 0.06 % by weight |
| SiO₂: | 1.14 % by weight |
| Loss of ignition: | 50.83 % by weight |
| Other: | 0.12 % by weight. |

The loss of ignition was virtually present exclusively in the form of CO₂.

By far more than 90% by weight, virtually almost 100% by weight of the magnesite consisted of magnesite crystals having an average size of over 1,000 µm, determined according to ASTM E112:2013 (Reapproved 2004).

The magnesite had a grain size in the range of between 50 and 150 mm.

To carry out the method according to the invention, the magnesite was placed into a gas-fired tunnel kiln and was heated at a heating rate of 48°C/h to a temperature of 1,750°C. The total firing time at 1,750°C was six hours.

During this firing, the magnesite was calcined and sintered into sintered magnesia.

The sintered magnesia was subsequently discharged from the tunnel kiln and was cooled down.

The sintered magnesia obtained thereafter had a chemical composition comprising the following oxides in the following percentages by weight:

| | |
|---|---|
| MgO: | 95.35% by weight |
| Fe₂O₃: | 0.48% by weight |
| MnO: | 0.02% by weight |
| CaO: | 1.54% by weight |
| Al₂O₃: | 0.12% by weight |
| SiO₂: | 2.25% by weight |
| Further: | 0.24% by weight. |

The bulk density of the sintered magnesia was 2.740 g/cm³.

Accordingly, the bulk density of the sintered magnesia was 77.0% of the true density of magnesia, and thus the sintered magnesia was highly porous.

The sintered magnesia was subsequently comminuted and was fractioned into the three grain fractions of between 3 and 5 mm, between 1 and < 3 mm and between >0 and < 1 mm by means of sieving and was mixed into a batch at the ratio of 10% by weight : 38% by weight : 32% by weight, together with 17% by weight of conventional sintered magnesia of the grain fraction of between > 0 and 0.1 mm and with 3% by weight of calcined aluminum oxide. The batch was subsequently further treated according to the batch of exemplary embodiment 1 and was sintered into a sintered refractory ceramic product.

The physical values determined for this product, which is identified with V3 in Table 2 below, are specified in the following Table 2.

For comparative purposes, a sintered refractory ceramic product according to the prior art, was produced in turn, which is identified with V4 in Table 2 below was produced, in turn. The product V4 was produced according to the product V3 according to the invention, but with the only difference that the used sintered magnesia was present in the same percentages of grain fractions, but was a sintered magnesia produced according to the prior art.

As follows from Table 2 below, the sintered refractory ceramic product V3 produced according to the method according to the invention had a significantly smaller bulk density and higher open porosity than product V4 according to the prior art, in turn. The product V3 according to the invention simultaneously also had a very good strength value.

The product V3 according to the invention furthermore had a consistently lower thermal conductivity than the product V4 according to the prior art across the entire measured temperature range of between 25°C and 1,200°C.

**Table 2**

| **Physical value** | **V3** | **V4** |
|---|---|---|
| bulk density [g/cm³] | 2.78 | 2.95 |
| open porosity [% by volume] | 20.9 | 15.8 |
| cold crushing strength [MPa] | 81.2 | 110.1 |
| thermal conductivity at 25°C [W/mK] | 13.5 | 16.7 |
| thermal conductivity at 200°C [W/mK] | 9.5 | 11.7 |
| thermal conductivity at 400°C [W/mK] | 6.8 | 8.5 |
| thermal conductivity at 600°C [W/mK] | 5.5 | 6.9 |
| thermal conductivity at 800°C [W/mK] | 4.6 | 5.8 |
| thermal conductivity at 1,000°C [W/mK] | 3.9 | 4.8 |
| thermal conductivity at 1,200°C [W/mK] | 3.6 | 4.4 |

## Claims

1. A method for treating magnesite, comprising the following steps:
a. providing magnesite, comprising the following features:
a. 1 the magnesite has a chemical composition comprising the following substances in the following percentages by weight:
| | |
|---|---|
| MgO: | at least 46.5 % by weight; |
| Fe₂O₃: | at most 0.5% by weight |
| loss of ignition: | at least 50.0 % by weight; |
a.2 the magnesite is present as sparry magnesite;
b. continuous heating of the magnesite to a temperature, at which the magnesite sinters into sintered magnesia.

2. The method according to claim 1, wherein the magnesite has a chemical composition comprising MgO in a percentage in the range of 46.5 to 47.6% by weight.

3. The method according to at least one of the preceding claims, wherein the magnesite has a chemical composition comprising total weight of MgO and loss of ignition in a percentage the range of 96.5 to 99.9% by weight

4. The method according to at least one of the preceding claims, wherein the magnesite has a chemical composition comprising Fe₂O₃ in a percentage of at most 0.3% by weight.

5. The method according to at least one of the preceding claims, wherein the magnesite has a chemical composition comprising MnO in a percentage of below 0.05% by weight.

6. The method according to at least one of the preceding claims, wherein the magnesite comprises magnesite crystals with a size of at least 1,000 µm.

7. The method according to at least one of the preceding claims, wherein the magnesite consists of at least 50% by weight of magnesite crystals with a size of at least 1,000 µm.

8. The method according to at least one of the preceding claims, wherein at least 97% by weight of the magnesite consists of MgCO₃.

9. A sintered magnesia, produced by the method according to at least one of the preceding claims, comprising the following features:
9.1 the sintered magnesia has a chemical composition comprising the following substances with the following percentages by weight:
| | |
|---|---|
| MgO: | at least 95.0% by weight; |
| Fe₂O₃: | at most 1.0% by weight; |
9.2 density: at most 2.95 g/cm³.

10. The sintered magnesia according to claim 9, which has a chemical composition comprising MgO in a percentage in the range of 95.0 to 97.5% by weight.

11. The sintered magnesia according to at least one of claims 9 to 10, which has a chemical composition comprising Fe₂O₃ in a percentage of at most 0.8% by weight.

12. The sintered magnesite according to claim 9, produced by a method according to at least one of claims 1 to 8.

13. The method according to at least one of claims 1 to 8, comprising the following further steps:
c. cooling down the sintered magnesia;
d. providing the sintered magnesia as raw material for producing a sintered refractory ceramic product.

14. The method according to claim 13, comprising the following further steps:
e. producing a batch by mixing the sintered magnesia with at least one further raw material;
f. producing a sintered refractory ceramic product by sintering the batch.

15. A sintered refractory ceramic product, produced by means of a method according to claim 14, comprising the following features:
the product consists of at least 80% by weight of MgO;
a bulk density of at most 2.85 g/cm³;
a thermal conductivity at 1,200°C below 4.0 W/mK;
a cold crushing strength at least 60 MPa.

## Amended claims

### Amended claims in accordance with Rule 137(2) EPC.

1. A method for treating magnesite, comprising the following steps:
a. providing magnesite, comprising the following features:
a.1 the magnesite has a chemical composition comprising the following substances in the following percentages by weight:
| | |
|---|---|
| MgO: | at least 46.5 % by weight; |
| Fe₂O₃: | at most 0.4 % by weight |
| loss of ignition: | at least 50.0 % by weight; |
a.2 the magnesite is present as sparry magnesite;
b. continuous heating of the magnesite to a temperature, at which the magnesite sinters into sintered magnesia.
